Europäisches Patentamt

European Patent Office

Office européen des brevets

(11) Veröffentlichungsnummer : **0 028 794**
**B1**

(12) **EUROPÄISCHE PATENTSCHRIFT**

(45) Veröffentlichungstag der Patentschrift :
13.03.85

(21) Anmeldenummer : 80106755.4

(22) Anmeldetag : 03.11.80

(51) Int. Cl.⁴ : **G 05 D 23/19,** G 05 B   9/02,
G 03 G  15/20

(54) Anordnung zur Überwachung der Funktion einer Heizanordnung.

(30) Priorität : 06.11.79 DE 2944796

(43) Veröffentlichungstag der Anmeldung :
20.05.81 Patentblatt 81/20

(45) Bekanntmachung des Hinweises auf die Patenterteilung : 13.03.85 Patentblatt 85/11

(84) Benannte Vertragsstaaten :
**AT BE CH FR GB IT LI LU NL SE**

(56) Entgegenhaltungen :
**DE-A- 2 635 019**
**GB-A- 2 011 659**
**US-A- 3 818 183**

(73) Patentinhaber : **Siemens Aktiengesellschaft**
**Berlin und München Wittelsbacherplatz 2**
**D-8000 München 2 (DE)**

(72) Erfinder : **Goedecke, Ludger, Dipl.-Ing.**
**Memlingstrasse 19**
**D-8000 München 71 (DE)**
Erfinder : **von Hayek, Hans, Ing. grad**
**Grundstrasse 18**
**D-8021 Neuried (DE)**

**Beschreibung**

Die Erfindung betrifft eine Anordnung zur Überwachung einer Heizanordnung gemäß den Oberbegriffen der Ansprüche 1 und 2.

Die Überwachung von Heizanordnungen, die ein Heizelement z. B. einen Heizstrahler enthalten, ist z. B. bei nichtmechanischen Druckgeräten bzw. Kopiergeräten erforderlich. Dort werden in einer Fixierstation, in der die auf einer Papierbahn aufgebrachten Tonerbilder in das Papier eingeschmolzen werden, Heizelemente, z. B. Heizstrahler, verwendet. Die Heizelemente können dabei innerhalb von Fixierwalzen oder Fixiersättel angeordnet sein. Um eine einwandfreie Fixierung der Tonerbilder auf der Papierbahn zu erreichen, ist es erforderlich, die Fixierung zu beenden, wenn ein Fehler in der Heizanordnung auftritt. Aus diesem Grunde ist eine Anordnung zur Überwachung der Heizanordnung erforderlich.

Aus der DE-A-26 35 019 ist eine Anordnung zur Überwachung einer Heizanordnung aus der Serienschaltung eines Schaltelementes und eines Heizelementes innerhalb eines elektrofotografischen Kopiergerätes bekannt. Während einer impulsweisen Ansteuerung der Überwachungsanordnung über einen Oszillator, wird das Heizelement als Meßelement betrieben und damit die Funktion des Schaltelementes bzw. der das Schaltelement ansteuernden Steuerschaltung überwacht.

Aufgabe der Erfindung ist es, eine Anordnung der eingangs genannten Art so auszugestalten, daß in einfacher und sicherern Weise damit die Funktion einer Heizanordnung überwacht werden kann.

Diese Aufgabe wird bei Anordnungen der eingangs genannten Arten gemäß dem kennzeichnenden Teil des ersten bzw. des zweiten Anspruches gelöst.

Weitere vorteilhafte Ausführungsformen der Erfindung sind in den Unteransprüchen gekennzeichnet.

Anhand von Ausführungsbeispielen wird die Erfindung erläutert. Es zeigen

Figur 1 eine erste Ausführungsform der Anordnung zur Überwachung der Heizanordnung,

Figur 2 eine zweite Ausführungsform der Anordnung zur Überwachung der Heizanordnung.

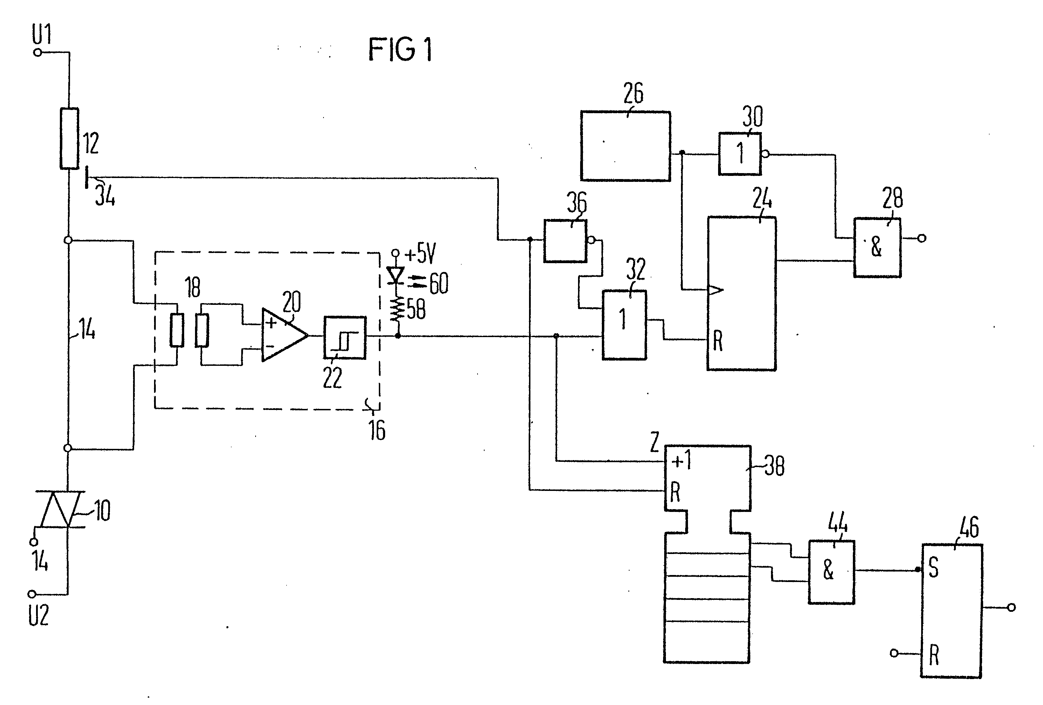

In Figur 1 besteht die Heizanordnung aus einem Schaltelement 10, z. B. einem Triac, und einem Heizelement 12, z. B. einem Heizstrahler. Die Serienschaltung aus dem Schaltelement 10 und dem Heizelement 12 liegt zwischen zwei Betriebspotentialen U1, U2, z. B. einer Wechselspannung von 50 Hz. Wenn an einen Steuereingang 11 des Schaltelementes 10 ein Signal angelegt wird, wird das Schaltelement 10 in den leitenden Zustand gebracht und damit fließt ein Wechselstrom durch das Schaltelement 10 und das Heizelement 12. Das Heizelement 12 ist damit eingeschaltet.

Zur Überwachung der Funktion des Heizelementes 12 wird in der Serienschaltung aus Schaltelement 10 und Heizelement 12 ein Meßelement 14 eingefügt, das in Fig. 1 aus einem Leitungsstück besteht. Wenn ein Strom durch die Serienschaltung fließt, entsteht an diesem Leitungsstück 14 ein Spannungsabfall von ca. 50 mVolt. Der Spannungsabfall am Leitungsstück 14 wird mit Hilfe einer Verstärkerschaltung 16 festgestellt.

Die Verstärkerschaltung 16 besteht aus einem Übertrager 18, dessen Primärwicklung parallel zum Leitungsstück 14 liegt. Die Sekundärwicklung des Übertragers 18 liegt an den Eingängen eines Operationsverstärkers 20. Der Ausgang des Operationsverstärkers 20 ist an einem Schmitt-Trigger 22 angeschlossen. Der Schmitt-Trigger 22 gibt an seinem Ausgang, der gleichzeitig der Ausgang der Verstärkerschaltung 16 ist, ein impulsförmiges Taktsignal ab, wenn der Spannungsabfall im Leitungsstück 14 einen bestimmten Schwellwert übersteigt. Das Taktsignal tritt also immer in der Frequenz des Wechselstromes im Leitungsstück 14 auf. Das Taktsignal kann von der negativen oder positiven Halbwelle des Wechselstromes abgeleitet werden.

Die Taktsignale am Ausgang der Verstärkerschaltung 16 treten also nur auf, wenn ein Wechselstrom in der Serienschaltung aus Schaltelement 10 und Heizelement 12 fließt. Die Taktsignale werden einem Flip-Flop 24, und zwar an dessen Rücksetzeingang R, zugeführt. Am taktabhängig gesteuerten Eingang des Flip-Flops 24 ist ein Oszillator 26 angeordnet, der Oszillatorsignale erzeugt, deren Frequenz geringer ist als die Frequenz des Wechselstromes. Das Flip-Flop 24 wird also immer gesetzt, wenn ein Oszillatorsignal am Ausgang des Oszillators 26 auftritt. Es wird aber immer wieder zurück gesetzt, wenn ein Taktsignal am Ausgang der Verstärkerschaltung 16 abgegeben wird. Da die Frequenz der Taktsignale höher ist als die Frequenz der Oszillatorsignale, wird das Flip-Flop 24 immer zurückgesetzt, solange ein Wechselstrom durch die Serienschaltung aus Schaltelement 10 und Heizelement 12 fließt. Fließt dagegen kein Wechselstrom in der Serienschaltung, dann bleibt das Flip-Flop 24 gesetzt.

Der Ausgang des Flip-Flops 24 wird mit Hilfe eines UND-Gliedes 28 abgetastet. Das UND-Glied 28 ist dazu mit seinem zweiten Eingang über ein Inverterglied 30 mit dem Ausgang des Oszillators 26 verbunden. Das bedeutet, daß mit Hilfe des UND-Gliedes 28 nach Auftreten der Rückflanke des Oszillatorsignales festgestellt wird, ob das Flip-Flop 24 gesetzt ist. Ist dies der Fall, dann liegt eine Störung im Heizelement 12 vor, wenn dieses betätigt werden muß, also ein Wechselstrom durch die Serienschaltung aus Schaltelement 10 und Heizelement 12 fließen muß.

Da die Überwachungsschaltung für das Heizelement 12 nur während des Zeitraumes, in dem Strom durch das Heizelement 12 fließen muß, eingeschaltet sein soll, wird dem Rücksetzeingang R des Flip-Flops 24 ein Sensorsignal von einem Sensor 34 über ein Inverterglied 36 und ein ODER-Glied 32 zugeführt. Der Sensor 34 kann einen NTC-Widerstand enthalten, der in der Nähe des Heizelementes 12 angeordnet ist und dessen Widerstand von der Temperatur des Heizelementes abhängt. Solange die Temperatur des Heizelementes einen bestimmten Wert nicht überschritten hat, gibt der Sensor 34 das Sensorsignal ab und zeigt damit an, daß ein Wechselstrom durch das Heizelement 12 fließen soll. Das Sensorsignal kann dabei binär « 1 » sein. Das Sensorsignal wird im Inverterglied 36 invertiert und über das ODER-Glied 32 an den Rücksetzeingang des Flip-Flops 24 angelegt. Durch die Invertierung wird aus « 1 » eine « 0 » und damit das Flip-Flop 24 vom Sensor 34 nicht beeinflußt. Soll dagegen nicht geheizt werden, also kein Strom durch das Heizelement 12 fließen, dann ist das Sensorsignal binär « 0 ». Dieses Signal wird durch das Inverterglied 36 binär « 1 » und setzt damit das Flip-Flop 24 zurück. Solange somit das Sensorsignal binär « 0 » ist, kann das Flip-Flop 24 durch den Oszillator 26 nicht gesetzt werden. Damit ist die Überwachungsschaltung für das Heizelement 12 abgeschaltet wenn kein Strom durch das Heizelement 12 fließen darf.

Bisher wurde der Teil der Anordnung beschrieben, der zur Überwachung des Heizelementes 12 erforderlich ist. Die Heizanordnung besteht jedoch auch aus dem Schaltelement 10, das ebenfalls in seiner Funktion überwacht werden muß. Arbeitet das Schaltelement 10 nicht mehr einwandfrei, ist es also für den Strom durchlässig, obwohl es gesperrt sein sollte, dann fließt auch ein Strom durch das Heizelement 12, wenn dieses nicht aufgeheizt werden soll. Um diesen Fehler feststellen zu können, ist ein Zähler 38 vorgesehen. Der Ausgang der Verstärkerschaltung 16 wird dem Zähleingang Z des Zählers 38 zugeführt. Der Rücksetzeingang R des Zählers 38 ist mit dem Sensor 34 verbunden.

Solange ein Wechselstrom durch das Heizelement 12 fließt, werden Taktsignale am Ausgang der Verstärkerschaltung 16 erzeugt, die dem Zähler 38 zugeführt werden. Wenn weiterhin der Sensor 34 ein Signal binär « 1 » abgibt und damit anzeigt, daß das Heizelement 12 aufgeheizt werden soll, liegt dieses Signal am Rücksetzeingang des Zählers 38 an und setzt den Zähler ständig zurück. In diesem fehlerfreien Zustand der Anordnung kann somit der Zähler 38 nicht hochzählen. Fließt dagegen ein Strom durch das Heizelement 12, obwohl das Heizelement 12 die gewünschte Temperatur bereits überschritten hat, dann gibt der Sensor 34 ein Signal binär « 0 » ab. Dieses Signal wird wiederum dem Rücksetzeingang R des Zählers 38 zugeführt und damit der Zähler 38 nicht mehr zurückgesetzt. Da gleichzeitig Taktsignale von der Verstärkerschaltung 16 kommen, wird nunmehr der Zähler 38 hochgezählt. Damit wird eine fehlerhafte Funktion des Schaltelementes angezeigt.

Zur Abtastung des Fehlerstandes kann an Ausgängen der Zählstufen ein UND-Glied 44 angeschlossen werden. Durch entsprechenden Anschluß der Zählstufen an das UND-Glied 44 kann erreicht werden, daß dieses ein Signal abgibt, wenn der Zähler 38 einen gewünschten Zählerstand erreicht hat. Das Signal vom UND-Glied 44 kann einen weiteren Flip-Flop 46 am Setzeingang zugeführt werden. Immer wenn das Flip-Flop 46 gesetzt ist, arbeitet dann das Schaltelement 10 fehlerhaft.

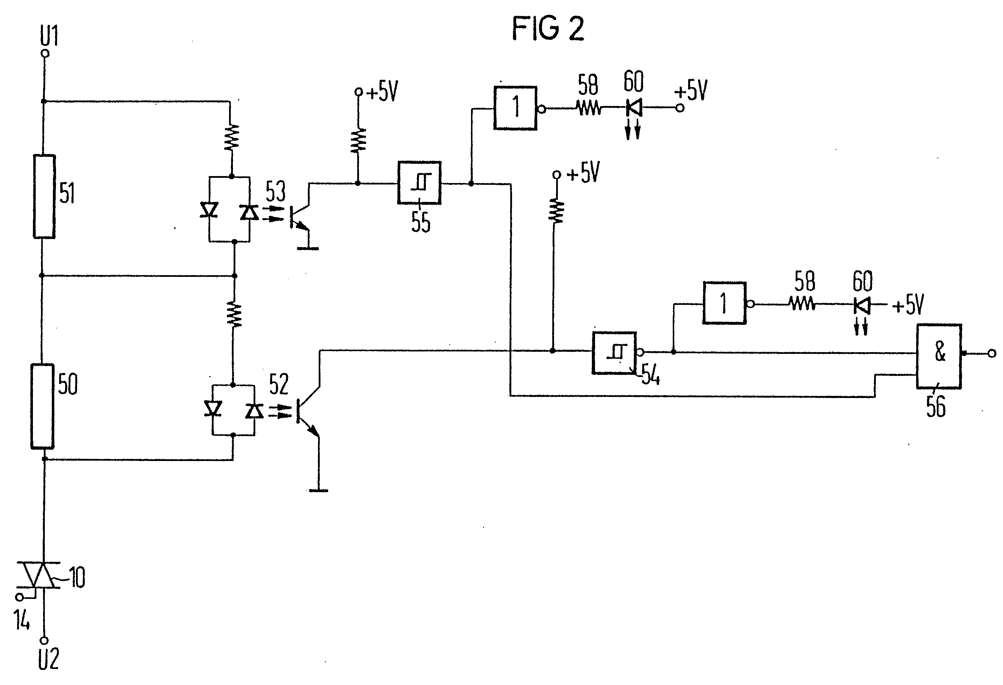

In Figur 1 ist als Meßelement ein Leitungsstück 14 verwendet worden. Nach Fig. 2 wird als Meßelement ein Heizelement selbst herangezogen. Dies ist dann vorteilhaft, wenn zwei Heizelemente in Serie geschaltet werden müssen. Die Serienschaltung der Heizelemente 50, 51 liegt bei eingeschaltetem Schaltelement 10 an der Wechselspannung U1, U2. Solange die Heizelemente 50, 51 einwandfrei funktionieren, entspricht die Spannung über jedem Heizelement 50, 51 der halben Wechselspannung. Ist ein Heizelement 50, 51 dagegen fehlerhaft, dann liegt an diesem Heizelement 50, 51 die gesamte Wechselspannung. Die Spannung am anderen Heizelement hat damit einen kleinen Wert.

Die Spannung über den Heizelementen 50, 51 wird jeweils einem Optokoppler 52, 53 zugeführt, die ansprechen, solange die Spannung über dem zugeordneten Heizelement 50, 51 nicht den kleinen Wert annimmt. Der Ausgang der Optokoppler 52, 53 ist mit jeweils einem Schmitt-Trigger 54, 55 verbunden, die die Taktsignale abgeben, die über ein NAND-Glied 56 dem Flip-Flop 24 bzw. dem Zähler 38 der Figur 1 zugeführt werden. Nach Fig. 2 besteht somit die Verstärkerschaltung aus dem Optokoppler 52 bzw. 53 dem Schmitt-Trigger 54 bzw. 55 und dem NAND-Glied 56. Die weitere Auswertung erfolgt auf die zu Figur 1 beschriebene Art und Weise.

Am Ausgang der Schmitt-Trigger 22, 54, 55 kann eine Anzeigeschaltung bestehend aus einem Widerstand 58 und einer LED-Diode 60 angeordnet werden. Die Diode 60 leuchtet solange Taktimpulse abgegeben werden, also ein Heizstrom fließt.

## Ansprüche

1. Anordnung zur Überwachung der Funktion einer Heizanordnung, die eine Serienschaltung aus einem Schaltelement (10) und mindestens einem Heizelement (12) enthält, bei der das Heizelement (12) im eingeschalteten Zustand des Schaltelementes (10) von einem Wechselstrom einer ersten Frequenz durchflossen wird, mit einem Meßelement (14) und einer parallel zu dem Meßelement (14) angeordneten Verstärkerschaltung (16) zur Feststellung der Spannung über dem Meßelement (14) und einem Oszillator (26), der mit einer gegenüber der ersten Frequenz niedereren Frequenz schwingt, insbesondere für die Überwachung des Heizelementes in der Fixierstation eines elektrostatischen Druckers oder Kopiergerätes, dadurch gekennzeichnet, daß die Verstärkerschaltung (16) ein impulsförmiges Taktsignal abgibt, wenn die Spannung am Meßelement (14) einen Schwellwert überschreitet, und daß ein Flip-Flop (24) vorgesehen ist, an dessen Rücksetzeingang (R) der Ausgang der Verstärkerschaltung (16) und ein Sensor (34) zur Feststellung der Temperatur des Heizelementes (12) angeschlossen ist, daß der Oszillator (26) mit dem taktabhängig gesteuerten Eingang des Flip-Flops (24) verbunden ist, und daß am Ausgang des Flip-Flops (24) eine den Schaltzustand abtastende Auswerteschaltung (28) angeordnet ist.

2. Anordnung zur Überwachung der Funktion einer Heizanordnung, die eine Serienschaltung aus einem Schaltelement (10) und mindestens einem Heizelement (12) enthält, bei der das Heizelement (12) im eingeschalteten Zustand des Schaltelementes (10) von einem Wechselstrom durchflossen wird, mit einem Meßelement (14) und einer parallel zu dem Meßelement (14) angeordneten Verstärkerschaltung (16) zur Feststellung der Spannung über dem Meßelement (14), dadurch gekennzeichnet, daß die Verstärkerschaltung (16) ein impulsförmiges Taktsignal abgibt, wenn die Spannung am Meßelement (14) einen Schwellwert überschreitet, daß ein Zähler (38) vorgesehen ist, dessen Zähleingang (Z) mit dem Ausgang der Verstärkerschaltung und dessen Rücksetzeingang (R) mit einem Sensor (34) verbunden ist, der die Temperatur des Heizelementes (12) feststellt und ein Sensorsignal abgibt, wenn das Heizelement unterhalb der gewünschten Temperatur liegt, und daß am Ausgang des Zählers (38) eine den Zählerstand abtastende Auswerteschaltung (44, 46) angeordnet ist.

3. Anordnung nach Anspruch 1, dadurch gekennzeichnet, daß die Auswerteschaltung des Flip-Flops (24) ein UND-Glied (28) enthält, dessen zweiter Eingang über ein Inverterglied (30) mit dem Oszillator (26) verbunden ist.

4. Anordnung nach Anspruch 2, dadurch gekennzeichnet, daß als Auswerteschaltung ein Flip-Flop (46) vorgesehen ist, daß über ein UND-Glied (44) mit zwei Stufenausgängen des Zählers (38) verbunden ist.

5. Anordnung nach einem der vorhergehenden Ansprüche, dadurch gekennzeichnet, daß das Meßelement aus einem Leitungsstück (14) zwischen Schaltelement (10) und Heizelement (12) besteht.

6. Anordnung nach Anspruch 5, dadurch gekennzeichnet, daß die Verstärkerschaltung (16) aus einem parallel zum Meßelement (14) liegenden Übertrager (18), einem an der Sekundärwicklung des Übertragers liegenden Operationsverstärker und einem am Ausgang des Operationsverstärkers angeordneten Schmitt-Trigger (22) besteht.

7. Anordnung nach einem der Ansprüche 1 bis 4, dadurch gekennzeichnet, daß das Meßelement aus dem Heizelement (50) besteht.

8. Anordnung nach Anspruch 7, dadurch gekennzeichnet, daß die Verstärkerschaltung aus einem parallel zu dem Heizelement (50) angeordneten Optokoppler (52) und aus einem hinter dem Optokoppler angeordneten Schmitt-Trigger (54) besteht.

9. Anordnung nach einem der Ansprüche 6 bis 8, dadurch gekennzeichnet, daß am Ausgang des Schmitt-Triggers eine LED-Diode (60) angeordnet ist.

## Claims

1. An arrangement for monitoring the function of a heating arrangement which includes a series circuit comprising a switching element (10) and at least one heater element (12), wherein the heater element (12) is traversed by an alternating current of a first frequency when the switching element (10) is in the switched-on state, with a measuring element (14) and an amplifier circuit (16) which is arranged parallel to the measuring element (14) and which serves to establish the voltage across the measuring element (14), and with an oscillator (26) which oscillates at a frequency which is lower than the first frequency, in particular for monitoring the heater element in the fixing station of an electrostatic printer or copier, characterised in that the amplifier circuit (16) emits a pulse-like clock signal when the voltage across the measuring element (14) exceeds a threshold value, and that a flip-flop (24) is provided whose reset input (R) is connected to the output of the amplifier circuit (16) and to a sensor (34) which serves to determine the temperature of the heater element (12), that the oscillator (26) is connected to the input — which is controlled in clock-pulse-dependent fashion — of the flip-flop (24), and that an analysis circuit (28) which samples the switching state is arranged at the output of the flip-flop (24).

2. An arrangement for monitoring the function of a heater arrangement which includes a series circuit comprising a switching element (10) and at least one heater element (12), wherein the heater element (12) is traversed by an alternating current when the switching element (10) is in the switched-on state, with a measuring element (14) and an amplifier circuit (16) which is arranged parallel to the measuring element (14) and which serves to establish the voltage across the measuring element (14), characterised in that the amplifier circuit (16) emits a pulse-like clock signal when the voltage across the measuring element (14) exceeds a threshold value, that a counter (38) is provided whose counting input (Z) is connected to the output of the amplifier circuit and whose reset input (R) is connected to a sensor (34) which determines the temperature of the heater element (12) and emits a sensor signal when the heater element is below the desired temperature, and that an analysis circuit (44, 46) which samples the count is arranged at the output of the counter (38).

3. An arrangement as claimed in claim 1, characterised in that the analysis circuit of the flip-flop (24) includes an AND-gate (28) whose second input is connected via an inverter (30) to the oscillator (26).

4. An arrangement as claimed in claim 2, characterised in that the analysis circuit comprises a flip-flop (46), which is connected via an AND-gate (44) to two stage outputs of the counter (38).

5. An arrangement as claimed in one of the preceding claims, characterised in that the measuring element comprises a line component (14) between the switching element (10) and the heating element (12).

6. An arrangement as claimed in claim 5, characterised in that the amplifier circuit (16) comprises a transformer (18) arranged parallel with the measuring element (14), an operational amplifier connected to the secondary winding of the transformer, and a Schmitt trigger (22) arranged at the output of the operational amplifier.

7. An arrangement as claimed in one of the claims 1 to 4, characterised in that the measuring element comprises a heater element (50).

8. An arrangement as claimed in claim 7, characterised in that the amplifier circuit comprises an opto-coupler (52) which is arranged in parallel with the heater element (50) and of a Schmitt trigger (54) which is arranged after the opto-coupler.

9. An arrangement as claimed in one of the claims 6 to 8, characterised in that a LED-diode (60) is arranged at the output of the Schmitt trigger.


## Revendications

1. Dispositif pour contrôler le fonctionnement d'un dispositif de chauffage qui comporte un montage série constitué par un élément de commutation (10) et au moins un élément de chauffage (12), dans lequel l'élément de chauffage (12) est, à l'état branché de l'élément de commutation (10), traversé par un courant alternatif d'une première fréquence, avec un élément de mesure (14) et, en parallèle sur l'élément de mesure (14), un circuit amplificateur (6) pour déterminer la tension aux bornes de l'élément de mesure (14), et avec un oscillateur (26) qui oscille avec une fréquence inférieure à la première fréquence, en particulier pour le contrôle de l'élément de chauffage d'un poste de fixage d'une imprimante électrostatique ou d'un appareil de reprographie, caractérisé par le fait que le circuit amplificateur (16) émet un signal de cadence de forme impulsionnelle lorsque la tension aux bornes de l'élément de mesure (14) dépasse une valeur de seuil, et qu'il est prévu un multivibrateur bistable (24) à l'entrée (R) de remise à l'état initial duquel sont reliés la sortie du circuit amplificateur (16) et un détecteur (34) pour déterminer la température de l'élément de chauffage (12), que l'oscillateur (26) est relié à l'entrée du multivibrateur bistable (24) commandé en fonction de la cadence et qu'à la sortie du multivibrateur bistable (24) est disposé un circuit d'évaluation (28) détectant l'état de commutation.

2. Dispositif pour contrôler le fonctionnement d'un dispositif de chauffage qui comporte un montage série constitué par un élément de commutation (10) et au moins un élément de chauffage (12), dans lequel élément de chauffage (12) est, à l'état branché de l'élément de commutation (10), traversé par un courant alternatif d'une première fréquence, avec un élément de mesure (14) et, en parallèle sur l'élément de mesure (14) un circuit amplificateur (6) pour déterminer la tension aux bornes de l'élément de mesure (14), caractérisé par le fait que le circuit amplificateur (16) émet un signal de cadence de forme impulsionnelle lorsque la tension aux bornes de l'élément de mesure (14) dépasse une valeur de seuil, qu'il est prévu un compteur (38) dont l'entrée de comptage (Z) est reliée à la sortie du circuit amplificateur et dont l'entrée (R) de remise à l'état initial est reliée à un détecteur (34) qui détermine la température de l'élément de chauffage (12) et émet un signal de détection lorsque l'élément de chauffage se situe en dessous de la température souhaitée, et qu'à la sortie du compteur (38) est disposé un circuit d'évaluation (44, 46) détectant l'état de comptage.

3. Dispositif selon la revendication 1, caractérisé par le fait que le circuit d'évaluation du multivibrateur bistable (24) comporte un circuit ET (28) dont la seconde entrée est reliée à l'oscillateur (26) par l'intermédiaire d'un circuit inverseur.

4. Dispositif selon la revendication 2, caractérisé par le fait que l'on prévoit, comme circuit d'évaluation, un multivibrateur bistable (46) qui est relié, par l'intermédiaire d'un circuit ET (44), à deux sorties d'étages du compteur (38).

5. Dispositif selon l'une des revendications précédentes, caractérisé par le fait que l'élément de mesure est constitué par une pièce conductrice (14) prévue entre l'élément de commutation (10) et l'élément de chauffage (12).

6. Dispositif selon la revendication 5, caractérisé par le fait que le circuit amplificateur (16) est constitué par un transformateur (18) qui est monté en parallèle sur l'élément de mesure (14), par un amplificateur opérationnel qui est relié à l'enroulement secondaire du transformateur et par une bascule de Schmitt (22) qui est disposée à la sortie de l'amplificateur opérationnel.

7. Dispositif selon l'une des revendications 1 à 4, caractérisé par le fait que l'élément de mesure est constitué par l'élément de chauffage (50).

8. Dispositif selon la revendication 7, caractérisé par le fait que le circuit amplificateur est constitué par un optocoupleur (52) qui est disposé parallèlement à l'élément de chauffage (50), et par une bascule de Schmitt (54) qui est disposée en aval de l'optocoupleur.

9. Dispositif selon l'une des revendications 6 à 8, caractérisé par le fait qu'une diode LED (60) est disposée à la sortie de la bascule de Schmitt.

FIG 1

# FIG 2

0 028 794